# EUROPÄISCHE PATENTSCHRIFT

(11) **EP 1 184 202 B1**
(45) Veröffentlichungstag und Bekanntmachung des Hinweises auf die Patenterteilung: **16.03.2005**
(21) Anmeldenummer: 01119979.1
(22) Anmeldetag: 18.08.2001
(51) Int. Cl.: B60B 3/04

(54) **Fahrzeugrad in Leichtbauweise**
Vehicle wheel in light weight construction
Roue de véhicule de construction légère

(30) Priorität: 01.09.2000 DE 10042989
(43) Veröffentlichungstag der Anmeldung: 06.03.2002
(73) Patentinhaber: ThyssenKrupp Stahl AG, 47166 Duisburg (DE)
(72) Erfinder: Eyl, Günter, 45481 Mülheim-Ruhr (DE); Keuschen, Wolfgang, 46149 Oberhausen (DE)
(74) Vertreter: COHAUSZ & FLORACK

(56) Entgegenhaltungen:
- DE-A- 3 712 774
- DE-A- 19 928 351
- DE-A- 19 952 043
- FR-A- 2 761 006
- US-A- 4 871 898

## Beschreibung

Die Erfindung betrifft ein Fahrzeugrad in Leichtbauweise mit einer Felge und einer Schüssel jeweils aus kaltverformtem höher- bis hochfestem Stahlblech, bei dem die Felge und die Schüssel im Überlappstoß stoffschlüssig gefügt sind.

Fahrzeugräder dieser Art sind seit Jahrzehnten bekannt. Bei diesen Rädern ist die stoffschlüssige Fügeverbindung eine Schweißverbindung. In der Praxis haben sich solche Räder bewährt. Sie erfüllen über ein ganzes Fahrzeugleben hinaus zuverlässig ihre Funktion.

Um über die Zuverlässigkeit eines neu entwickelten Rades eine Aussage machen zu können, wendet man Testverfahren an, die die betriebliche Belastung simulieren. Um in angemessener Zeit verwertbare Testergebnisse zu erhalten, werden bei den verschiedenartigen Belastungen häufig höhere Kräfte eingesetzt. Wenn mit einem Fahrzeugrad die bei diesen Tests vorgegebenen Sollwerte, zum Beispiel Lastspielwechsel von über 1 Million auf einem Rollprüfstand, erreicht werden, ohne Schäden zu zeigen, dann gilt ein solches Rad als praxistauglich.

Im Fahrzeugbau ist es üblich, alle Fahrzeugkomponenten hinsichtlich der Möglichkeiten des Leichtbaus zu untersuchen. Das gilt auch für die Fahrzeugräder, zumal es sich bei Fahrzeugrädern um ungefederte Massen handelt. Im Zuge dieser Entwicklung hat man die Materialdicke von Felge und Radschüssel vermindert und dafür die Zugfestigkeit dieser Radteile erhöht. Obgleich nach wie vor starke Bestrebungen für eine weitere Gewichtsreduzierung bestehen, sind bei Rädern aus Stahl in den letzten Jahren keine wesentlichen Fortschritte erzielt worden, weil die bei Rädern bis heute bewährte Schweißverbindung von Felge und Schüssel eine weitere Reduzierung der Blechdicke nicht erlaubte.

Der Erfindung liegt die Aufgabe zugrunde, ein Fahrzeugrad der eingangs genannten Art zu schaffen, das bei gleichem Gewicht höher belastbar oder bei gleicher Belastbarkeit im Gewicht leichter ist.

Diese Aufgabe wird bei dem Rad der eingangs genannten Art dadurch gelöst, daß die stoffschlüssige Fügeverbindung eine MIG-Lötverbindung ist.

Tests mit dem erfindungsgemäßen Rad haben gezeigt, daß das Rad bei 10 Millionen Lastspielwechseln auf dem Rollprüfstand keine erkennbaren Fehler aufwies. Herkömmliche Fahrzeugräder mit Schweißfügeverbindungen halten dagegen nur 1 bis 2 Millionen Lastspielwechsel aus. Das bedeutet, daß im Vergleich zu herkömmlichen Rädern noch ein erhebliches Potential zur Gewichtsreduzierung und/oder für die Erhöhung der Dauerbelastbarkeit besteht.

MIG-Lötverbindungen als Ersatz für MIG-Schweißverbindungen sind seit längerem zum Fügen verzinkter Stähle auf verschiedenen Gebieten, darunter auch im Automobilbau, bekannt (Deutscher Verband für Schweißen und verwandte Verfahren e.V., "Lichtbogenlöten", Entwurf Merkblatt DVS 948, April 2000). In diesen Fällen wird die MIG-Lötverbindung einer MIG-Schweißverbindung vorgezogen, weil beim MIG-Löten weniger Wärme als beim MIG-Schweißen in die Fügepartner eingebracht wird, weshalb weniger Zink am Fügeort verdampft wird, so daß der Korrosionsschutz im wesentlichen erhalten bleibt. Auch wenn das MIG-Löten wegen seiner besonderen Vorteile bei zinkbeschichteten Stahlblechen seine wohl häufigste Anwendung findet, kann es auch an unbeschichteten Stahlblechen eingesetzt werden.

Für das MIG-Löten eignen sich alle üblichen Verfahrenstechniken, darunter insbesondere das Kurzlichtbogen- oder Impulslichtbogenlöten. Die Verfahren werden unter Schutzgas, insbesondere Argon, durchgeführt.

In an sich bekannter Weise kann als Lot eine Legierung auf Cu- oder Ni-B-Si-Basis eingesetzt werden.

Vorzugsweise hat die Felge eine Materialdicke von 1,5 - 3,5 mm und eine Zugfestigkeit von ca. 500 - 900 N/mm², während die Schüssel eine Materialdicke von 2,5 - 4,0 mm und eine Zugfestigkeit von ca. 500 - 900 N/mm² hat.

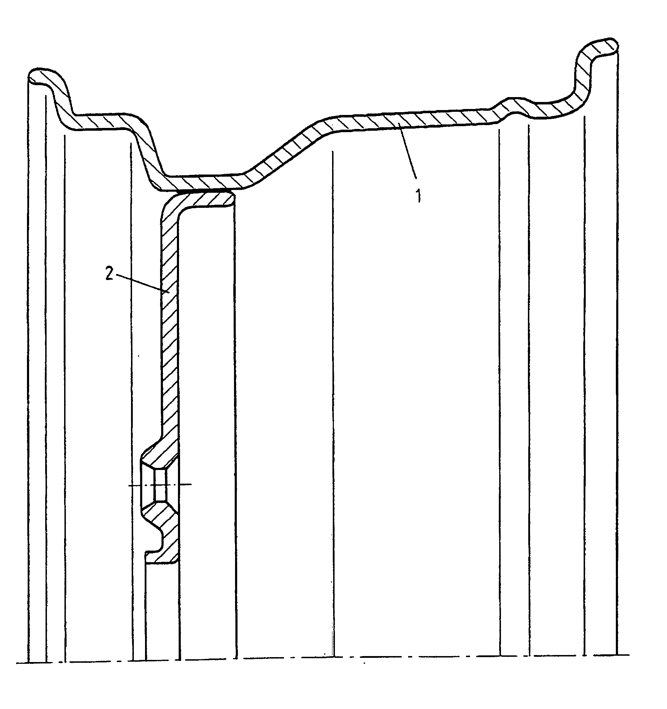

In der Zeichnung ist ein Fahrzeugrad im Halbschnitt gezeigt, das mit einem luftgefüllten Reifen bestückt werden kann. Das Rad besteht aus einer Felge 1, und zwar einer Tiefbettfelge, und einer Schüssel 2. Sowohl die Felge 1 als auch die Schüssel 2 sind aus ebenen hochfesten Stahlblechen durch Kaltverformung hergestellt. Wegen der unterschiedlichen Belastungen eignet sich für die Felge 1 ein dünneres Blech als für die Schüssel 2. Auch können die Bleche unterschiedliche Zugfestigkeiten aufweisen.

Der äußere Rand der Schüssel 2 ist nicht durchlaufend, sondern über den Umfang verteilt an einigen Stellen bogenförmig ausgespart. Die Schüssel 2 ist in die Felge 1 hineingepreßt, so daß sie mit ihren zwischen den Aussparungen gebildeten Stegen überlappend an der Felge 1 anliegt. In den überlappten Bereichen sind die Felge 1 und die Schüssel 2 durch eine MIG-Lötverbindung miteinander verbunden. Als Zusatzwerkstoff für das MIG-Löten ist eine Legierung auf Cu- oder Ni-B-Si-Basis eingesetzt. Die Zugfestigkeit des Lötwerkstoffes sollte bei 300 - 600 N/mm² liegen.

## Patentansprüche

1. Fahrzeugrad in Leichtbauweise mit einer Felge (1) und einer Schüssel (2) jeweils aus kaltverformtem höherbis hochfestem Stahlblech, bei dem die Felge (1) und die Schüssel (2) im Überlappstoß stoffschlüssig gefügt sind,
**dadurch gekennzeichnet, daß** die stoffschlüssige Fügeverbindung eine MIG-Lötverbindung ist.

2. Fahrzeugrad nach Anspruch 1,
**dadurch gekennzeichnet, daß** das eingesetzte Lötlot eine Legierung auf Cu- oder Ni-B-Si-Basis ist.

3. Fahrzeugrad nach Anspruch 1 oder 2,
**dadurch gekennzeichnet , daß** die Felge (1) eine Materialdicke von 1,5 - 3,5 mm und eine Festigkeit von 500 - 800 N/mm² hat.

4. Fahrzeugrad nach einem der Ansprüche 1 bis 3,
**dadurch gekennzeichnet, daß** die Schüssel (2) eine Materialdicke von 3,0 - 4,0 mm und eine Festigkeit von 500 - 900 N/mm² hat.

## Claims

1. Vehicle wheel in light-weight construction with a rim (1) and a dish (2) of cold-worked sheet steel of elevated to high strength each, the rim 1) and the dish (2) being joined in flush fitting, overlapping abutment **characterised in that** the flush fitting joint connection is an MIG soldering joint.

2. Vehicle wheel according to claim 1 **characterised in that** the solder used is an alloy based on Cu or Ni-B-Si.

3. Vehicle wheel according to claim 1 or 2 **characterised in that** the rim (1) has a material thickness of 1.5 - 3.5 mm and a strength of 500 - 800 N/mm².

4. Vehicle wheel according to claim 1 to 3 **characterised in that** the dish (2) has a material thickness of 3.0 - 4.0 mm and a strength of 500 - 900 N/ mm².

## Revendications

1. Roue pour véhicule automobile en construction légère comprenant une jante (1) et un voile de roue (2) réalisés chacun dans une tôle d'acier formée à froid à résistance relativement élevée jusqu'à élevée, dans laquelle la jante (1) et le voile de roue (2) sont assemblés par fusion de matière en assemblage à recouvrement, **caractérisée en ce que** l'assemblage par fusion de matière est obtenu par brasage sous gaz inerte (MIG).

2. Roue pour véhicule automobile selon la revendication 1, **caractérisée en ce que** le métal d'apport de brasage utilisé est un alliage à base de Cu ou à base de Ni-B-Si.

3. Roue pour véhicule automobile selon la revendication 1 ou 2, **caractérisée en ce que** la jante (1) possède une épaisseur de 1,5 à 3,5 mm et une résistance de 500 à 800 N/mm².

4. Roue pour véhicule automobile selon l'une quelconque des revendications 1 à 3, **caractérisée en ce que** le voile de roue (2) possède une épaisseur de 3,0 à 4,0 mm et une résistance de 500 à 900 N/mm².
